# EUROPÄISCHE PATENTSCHRIFT

(11) **EP 0 492 265 B1**
(45) Veröffentlichungstag und Bekanntmachung des Hinweises auf die Patenterteilung: **12.07.1995**
(21) Anmeldenummer: 91121140.7
(22) Anmeldetag: 10.12.1991
(51) Int. Cl.: G01P 5/02, G01L 5/00

(54) **Verfahren und Vorrichtung zum Messen von Strömungen**
Method and apparatus for flow measurement
Procédé et dispositif pour la mesure d'écoulements

(30) Priorität: 21.12.1990 DE 4041076
(43) Veröffentlichungstag der Anmeldung: 01.07.1992
(73) Patentinhaber: Tippelmann, Götz, D-74196 Neuenstadt (DE)
(72) Erfinder: Tippelmann, Götz, D-74196 Neuenstadt (DE)
(74) Vertreter: Müller, Hans, Dipl.-Ing.

(56) Entgegenhaltungen:
- DE-C- 2 613 275
- US-A- 3 719 079

## Beschreibung

### TECHNISCHES GEBIET

Die vorliegende Erfindung betrifft ein Verfahren und eine Vorrichtung zum Messen der Wirbelkomponenten von Strömungen insbesondere in Zylindern/Verbrennungsräumen von Verbrennungskraftmaschinen, wobei die Strömungen durch Einlaßorgane induziert werden. Derartige Vorrichtungen weisen eine Strömungsgleichrichtervorrichtung und eine Meßeinrichtung auf. Bei der Neuentwicklung und Fertigung von Verbrennungskraftmaschinen hat, um den heutigen Ansprüchen in Bezug auf Kraftstoffverbrauch, Abgasqualität und Laufruhe zu genügen, die Beherrschung bzw. wenigstens die Einbeziehung der Luftbewegung, die durch die Einlaßorgane im Zylinderkopfbereich induziert wird, eine entscheidende Bedeutung erlangt.

### STAND DER TECHNIK

Aus der DE-PS 26 13 275 ist es bekannt, durch geeignete Vorrichtungen die Drallströmung um die Zylinderachse in simulierten Verbrennungsräumen von Kolbenmotoren zu untersuchen und durch entsprechende Auswertung insbesondere die Formgebung des Einlaßkanals in geeigneter Weise abzustimmen, um dadurch den Einfluß des Luftdralls auf den Verbrennungsablauf zu optimieren.

Bei der aus der DE-PS 26 13 275 bekannten Drall-Meßeinrichtung ist dabei eine zylindrische Kammer von einer Strömungsgleichrichterplatte abgeschlossen, die ihrerseits an einer Einrichtung so befestigt ist, daß Momente um die Zylinderachse gemessen werden können, die dem Drehmoment an der Strömungsgleichrichterplatte angehören. Man ermittelt also einen in Richtung der Hauptströmung gerichteten integralen Drallwert, was üblicherweise in einem stationären Durchströmversuch geschieht. Drallmessungen in diesem Sinne sind heute bei der Brennverfahrensentwicklung und auch in der Serienkontrolle üblich.

Die gesteigerten Anforderungen an Kraftstoffverbrauch und Abgasqualität haben die Frage aufgeworfen, ob nicht weitere Strömungskennwerte ermittelt werden müssen, die den Ablauf der Verbrennung beeinflussen, insbesondere deshalb, weil sich nachweisen ließ, daß offensichtlich neben dem Drall um die Zylinderachse weitere Strömungseigenschaften das Ergebnis der Verbrennung beeinflussen. Es ist eine Vielzahl von Versuchen bekannt geworden, die Strömungen im Zylinder sichtbar zu machen oder mittels Laser-Doppler-Anemometrie die Geschwindigkeitsfelder auszumessen, um dadurch zu einem besseren Verständnis des Verbrennungsablaufs zu kommen. Die grundsätzliche Schwierigkeit liegt dabei darin, daß von einer Vielzahl von Einzelzuständen, die die im Raum verteilten Strömungsvektoren darstellen, der Zusammenhnag mit einer diskreten Größe - z. B. Kraftstoffverbrauch oder Stickoxidgehalt des Abgases - hergestellt werden soll. Nachdem es so erfolgreich gelungen ist, die Drehströmung um die Zylinderachse, unabhängig von der Geschwindigkeitsverteilung, durch ihren Drehimpuls zu charakterisieren, stellt sich die Frage, ob es weitere ähnliche Größen gibt, die der Messung zugänglich sind und die ähnlichen Einfluß auf den Ablauf der Verbrennung haben. Diese Größen sind der Drehimpuls einer walzenförmigen Strömung, die sich um eine Achse senkrecht zur Zylinderachse ausbildet, wobei der Drehimpuls nach Größe und Richtung zu bestimmen ist. Des weiteren ergibt sich ein Drehimpuls infolge eines Torodialwirbels, der sich fast immer im Zylinder bildet. Der Torodialwirbel zeigt hierbei ein in etwa torusförmiges Strömungsbild.

### DARSTELLUNG DER ERFINDUNG

Der Erfindung liegt die Aufgabe zugrunde, ein geeignetes Verfahren und eine geeignete Vorrichtung zur Bestimmung der genannten Strömungskenngrößen in integraler Form anzugeben, das bzw. die die Strömungskenngrößen zuverlässig ermittelt und wobei die Vorrichtung einen einfachen konstruktiven Aufbau aufweist.

Die Erfindung hinsichtlich des Verfahrens ist durch sämtliche Merkmale des Anspruchs 1 und hinsichtlich der Vorrichtung durch sämtliche Merkmale des Anspruchs 4 gegeben. Vorteilhafte Ausgestaltungen und Weiterbildungen sind Gegenstand von abhängigen Ansprüchen.

Die Vorrichtungserfindung zeichnet sich demgemäß dadurch aus, daß die Strömungsgleichrichtervorrichtung die Strömungen derart umlenkt, daß sie nach dem Passieren der Strömungsgleichrichtervorrichtung keinen Impuls in Richtung der Strömungsgleichrichtervorrichtung und keinen Drehimpuls um die Achse der Strömungsgleichrichtervorrichtung haben und daß die Meßeinrichtung die während des Strömungsvorgangs an der Strömungsgleichrichtervorrichtung entstehenden Reaktionsgrößen ermittelt. Mit der erfindungsgemäßen Vorrichtung ist es möglich, sowohl den Strömungskennwert für den Drall um die Profilachse, den walzenförmigen Drall nach seiner Größe und seiner Achsenlage als auch den Drehimpuls des Torodialwirbels in integraler Form zu messen. Die Messung läßt sich hierbei einfach und schnell im Rahmen einer stationären Durchströmmessung durchführen.

Bevorzugt weist die Strömungsgleichrichtervorrichtung im wesentlichen senkrecht zur Achse der Strömungsgleichrichtervorrichtung angeordnete Ausnehmungen auf, deren gedachte Verlängerung durch die Achse der Strömungsgleichrichtervorrichtung verläuft. Die Ausnehmungen können hierbei durch ein Kanalsystem oder ein Lamellensystem gebildet werden.

In einer bevorzugten Ausführungsform der erfindungsgemäßen Vorrichtung ist die Strömungsgleichrichtervorrichtung als im wesentlichen trichterförmiges Bauteil ausgebildet, wobei das trichterförmige Bauteil bevorzugt so angeordnet ist, daß es beim Meßvorgang von innen nach außen durchströmt wird. Hierbei hat es sich als günstig herausgestellt, das trichterförmige Bauteil im Bereich seiner Spitze zusammen mit der Meßvorrichtung zu lagern.

In diesem Bereich des trichterförmigen Bauteils weist die Meßeinrichtung eine Meßeinheit zum Ermitteln der Auflagerkräfte der Strömungsgleichrichtervorrichtung, eine Meßeinheit zum Ermitteln zweier senkrecht aufeinanderstehender Biegemomente (senkrecht zur Achse der Strömungsgleichrichtervorrichtung) und eines Torsionsmomentes (in Achsenrichtung wirkend) auf. Mit der Messung der Biegemomente wird der walzenförmige Drall um die entsprechenden zwei Achsen in integraler Art ermittelt. Die Messung des Torsionsmoments ergibt den Drehimpuls um die Zylinderachse.

Die Gleichrichtervorrichtung weist in ihrer Umfangsrichtung eine geringe Umfangssteifigkeit auf, wodurch die Auflagerkraftmessung für unterschiedliche Bereiche ermöglicht wird. Durch die unterschiedliche Verteilung der Auflagerkräfte können Rückschlüsse auf die Größe und Richtung des sich ausbildenden Torodialwirbels gezogen werden.

Dies ist auch dadurch möglich, daß die Gleichrichtervorrichtung in einzelne Bauabschnitte unterteilt ist, wobei die Meßeinrichtung die beim Strömungsvorgang entstehenden Auflagerkräfte der einzelnen Bauabschnitte ermittelt. Hierbei sind die Bauabschnitte bevorzugt sektorartig ausgebildet und an ihrem oberen und unteren freien Rand gelagert. Durch Messung der Auflagerkräfte an beiden Rändern eines Bauabschnittes können nun die durch einen Torodialwirbel ausgelösten Strömungskräfte als gewichtete Differenz der genannten Auflagerkräfte gemessen werden.

Zur Abdichtung weist die Strömungsgleichrichtervorrichtung eine umlaufende Schürze auf, die in eine entsprechend geformte Tasche eintaucht, wobei diese Tasche zur Einstellung der Dämpfung des Meßsystems mit einem Dämpfungsmedium bevorzugt Dämpfungsöl befüllt ist.

Weitere Ausführungsformen und Vorteile der Erfindung ergeben sich durch die in den Ansprüchen ferner aufgeführten Merkmale sowie durch die nachstehend angegebenen Ausführungsbeispiele.

Das erfindungsgemäße Verfahren zum Messen der Wirbelkomponenten von Strömungen insbesondere in Zylindern/Verbrennungsräumen von Verbrennungskraftmaschinen, wobei die Strömungen durch Einlaßorgane induziert werden und eine Strömungsgleichrichtervorrichtung vorhanden ist, ist gekennzeichnet durch folgende Verfahrensschritte: Umlenken der Strömungen derart, daß sie nach dem Passieren der Strömungsgleichrichtervorrichtung keinen Impuls in Richtung der Achse der Strömungsgleichrichtervorrichtung und keinen Drehimpuls um die Achse der Strömungsgleichrichtervorrichtung haben und Messen der während des Strömungsvorgangs an der Strömungsgleichrichtervorrichtung entstehenden Reaktionsgrößen (Reaktionskräfte (A, B) und Momente (Mₓ, M_{y}, M_{T})).

In vorteilhafter Art und Weise zeichnet sich das Verfahren dadurch aus, daß die Gleichrichtervorrichtung als rotationssymmetrisches Teil so ausgebildet ist, daß alle austretenden Teilströmungen auf einem senkrecht auf der Rotationsachse stehenden Strahl verlaufen, wobei die Rotationsachse die Richtung T, zwei auf ihr und aufeinander senkrecht stehende Achsen die Richtungen X und Y definieren, und die in Richtung T, X, Y wirkenden Momente bzw. Beanspruchungen gemessen werden.

Bevorzugt wird die Verteilung des Axialimpulsstromes auf einen Strömungsquerschnitt dadurch bestimmt, daß die Gleichrichtervorrichtung in Elemente aufgeteilt wird, deren Auflagerreaktionen getrennt gemessen werden.

### KURZE BESCHREIBUNG DER ZEICHNUNG

Die Erfindung sowie vorteilhafte Ausführungsformen und Weiterbildungen werden im folgenden anhand der in der Zeichnung dargestellten Beispiele näher beschrieben und erläutert. Es zeigen:
- Fig. 1: schematischer Querschnitt durch eine Meßvorrichtung mit einer trichterförmigen Strömungsgleichrichtervorrichtung für einen zylindrischen Brennraum und
- Fig. 2: schematische Darstellung einer in Sektoren unterteilte trichterförmige Strömungsgleichrichtervorrichtung mit den im Versuch gemessenen Werten.

### WEGE ZUM AUSFÜHREN DER ERFINDUNG

An einen zylindrischen Verbrennungsraum 10 einer in den Figuren nicht näher dargestellten Brennkraftmaschine schließt eine Meßvorrichtung 12 zum Messen der Wirbelkomponenten von Strömungen an, die in den Verbrennungsraum 10 einströmende Meßluft verursacht. Die Meßvorrichtung 12 weist eine trichterförmig ausgebildete Gleichrichtereinheit 14 auf, die an die Wandung 16 des Verbrennungsraums 10 unterseitig anschließt. Dem Verbrennungsraum 10 wird über einen Einlaßkanal 18 Meßluft zugeführt. Im Einlaßbereich 20 des Einlaßkanals 18 in den Verbrennungsraum 10 ist in der Achse 22 des Verbrennungsraums 10 ein Ventil 24 angeordnet, das während des Meßbetriebs in Offen-Stellung steht.

Die Achse 22 des Verbrennungsraums 10 fällt mit der Achse 26 der Gleichrichtereinheit 14 zusammen. Die Gleichrichtereinheit 14 weist senkrecht zu ihrer Achse 26 radial verlaufende Öffnungen 28 auf, durch die die einströmende Meßluft hindurchtreten muß und somit auf die Gleichrichtereinheit 14 während des Meßvorganges gewisse Kräfte einwirken.

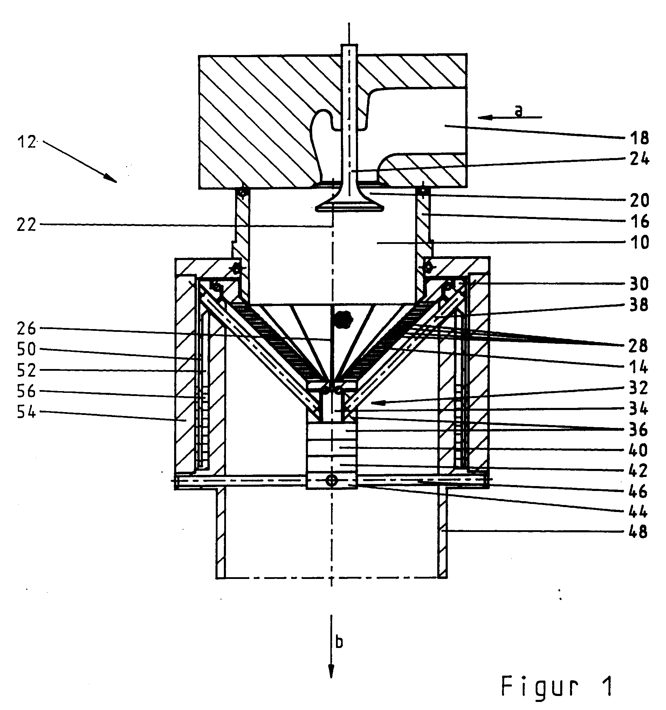

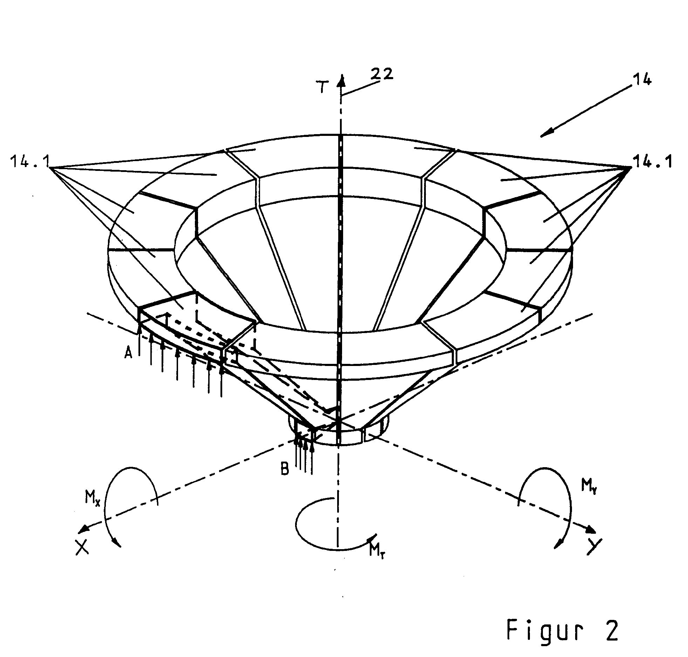

Im Anschlußbereich der trichterförmigen Gleichrichtereinheit 14 an die Wandung 16 des Verbrennungsraums 10 ist außenseitig ein stabiler Ring 30 vorhanden, an der der äußere Rand der Gleichrichtereinheit 14 aufliegt. Im Bereich der Spitze der trichterförmigen Gleichrichtereinheit 14 ist eine Meßeinrichtung 32 vorhanden, der einer ersten Meßeinheit 34, die die Auflagerkraft der Gleichrichtereinheit 14 im Bereich der Spitze erfaßt. Unterhalb der ersten Meßeinheit 34 ist eine zweite Meßeinheit 36 schematisch dargestellt, die die über Auflagerstreben 38 übertragenen Auflagerkräfte des oberen Randes der trichterförmigen Gleichrichtereinheit 14 ermittelt. Hierbei sind die Auflagerstreben 38 an den umlaufenden Ring 30 angeschlossen. Durch diese Lagerung der Gleichrichtereinheit 14 wird erreicht, daß die durch einen Torodialwirbel ausgelösten Strömungskräfte als gewichtete Differenz der Auflagerkräfte vom äußeren Rand (Kräfte A, Fig. 2) und der Auflagerkräfte im Spitzenbereich der trichterförmigen Gleichrichtereinheit (Kräfte B, Fig. 2) gemessen werden können. Unterhalb der zweiten Meßeinheit 36 ist eine Biegemeßzelle 40 angeordnet, die in Fig. 1 schematisch dargestellt ist. Diese Biegemeßzelle mißt Biegemomente Mₓ, M_{y} (Fig. 2), deren Drehachsen aufeinander senkrecht stehen, und die gleichzeitig senkrecht zur Achse 26 bzw. 22 verlaufen. Diese Momente Mₓ, M_{y} entsprechen dem walzenförmigen Drall um zwei Achsen, der auf diese Art und Weise gemessen wird. Schließlich ist noch unterhalb der Biegemeßzelle 40 ein in Figur schematisch dargestellter Torsionssensor 42 angeordnet, der die Drallbewegung um die Achse 22 bzw. 26 mißt. Die Meßeinrichtung 32 ist auf einem Lagerblock 44 gelagert, der über Lagerstreben 46 an der Innenwandung eines Rohres 48 angeschlossen, wobei das Rohr 48 einen nur unwesentlich größeren Durchmesser aufweist als der des Verbrennungsraums 10.

An den Ring 30 ist nach außen versetzt eine Schürze 50 angeschlossen, die in eine im Außenbereich des Rohres 48 vorhandene Tasche 52 eingreift. Die Tasche 52 wird durch ein in etwa ringförmiges an der Rohraußenseite angebrachtes Profil 54 gebildet. Die Tasche 52 ist teilweise mit Dämpfungsöl 56 befüllt. Die Füllhöhe ist so gewählt, daß die Schürze 50 zumindest bereichsweise in das Dämpfungsöl eintaucht. Die Ausbildung der Meßvorrichtung 12 mit Schürze 50 und Tasche 52 dient neben einer guten Dämpfung des Systems auch einer guten äußeren Abdichtung.

Wie in Fig. 2 dargestellt, ist die Gleichrichtereinheit 14 in einzelne Sektoren 14.1 unterteilt, von denen jeweils die Randauflagerkräfte A bzw. B des oberen bzw. unteren Randes eines Sektors 14.1 gemessen werden. Eine Unterteilung in Sektoren ist jedoch nicht zwingend erforderlich. Es kann auch die Wandstärke der Gleichrichtereinheit entsprechend variiert werden.

Die Messung der Strömungen selbst wird in einem stationären Strömungsversuch durchgeführt. Hierzu wird zunächst Meßluft über den Einlaßkanal 18 zugeführt (Pfeil a). Nach dem Durchströmen der Gleichrichtereinheit 14 strömt die Meßluft innerhalb des Rohres 48 ab (Pfeil b). Mit der erfindungsgemäßen Meßvorrichtung 12 lassen sich die Strömungskennwerte des Dralls um die Zylinderachse, des walzenförmigen Dralls nach seiner Größe und seiner Achsenlage und des Drehimpulses des Torodialwirbel in integraler Form ermitteln. Die Auswertung der ermittelten Werte dient dazu, die Formgebung des Einlaßkanals und/oder Verbrennungsraumes in geeigneter Weise abstimmen und dadurch den Verbrennungsablauf in Hinblick auf die Strömungsverhältnisse optimal zu gestalten.

## Patentansprüche

1. Verfahren zum Messen der Wirbelkomponenten von Strömungen insbesondere in Zylindern/Verbrennungsräumen von Verbrennungskraftmaschinen, wobei die Strömungen durch Einlaßorgane induziert werden und eine eine Achse aufweisende Strömungsgleichrichtervorrichtung vorhanden ist,
**gekennzeichnet durch**
folgende Verfahrensschritte:
- Umlenken der Strömungen mittels der Strömungsgleichrichtervorrichtung derart, daß sie nach dem Passieren der Strömungsgleichrichtervorrichtung keinen Impuls in Richtung der Achse der Strömungsgleichrichtervorrichtung und keinen Drehimpuls um die Achse der Strömungsgleichrichtervorrichtung haben und
- Messen der während des Strömungsvorgangs durch das Umlenken an der Strömungsgleichrichtervorrichtung entstehenden Reaktionsgrößen, insbesondere der auftretenden Reaktionskräfte (A, B) und Momente (Mₓ, M_{y}, M_{T}).

2. Verfahren nach Anspruch 1,
**dadurch gekennzeichnet,** daß
die Gleichrichtervorrichtung als rotationssymmetrisches Teil so ausgebildet ist, daß alle austretenden Teilströmungen auf einem senkrecht auf der Rotationsachse stehenden Strahl verlaufen, wobei die Rotationsachse die Richtung T, zwei auf ihr und aufeinander senkrecht stehende Achsen die Richtungen X und Y definieren, und die in Richtung T, X, Y wirkenden Momente bzw. Beanspruchungen gemessen werden.

3. Verfahren nach Anspruch 1,
**dadurch gekennzeichnet,** daß
die Verteilung des Axialimpulsstromes auf einen Strömungsquerschnitt dadurch bestimmt wird, daß die Gleichrichtervorrichtung in Elemente aufgeteilt wird, deren Auflagerreaktionen getrennt gemessen werden.

4. Vorrichtung (12) zum Durchführen des Meßverfahrens nach einem oder mehreren der Ansprüche 1 bis 3, mit einer eine Achse (26) aufweisenden Strömungsgleichrichtervorrichtung (14) und einer Meßvorrichtung (32),
**dadurch gekennzeichnet,** daß
- die Strömungsgleichrichtervorrichtung (14) derart ausgebildet ist, daß die Strömungen im Betrieb derart umgelenkt werden, daß sie nach dem Passieren der Strömungsgleichrichtervorrichtung (14) keinen Impuls in Richtung der Achse (26) der Strömungsgleichrichtervorrichtung (14) und keinen Drehimpuls um die Achse (26) der Strömungsgleichrichtervorrichtung (14) haben und
- die Meßvorrichtung (32) so ausgebildet ist, daß die während des Strömungsvorgangs durch das Umlenken an der Strömungsgleichrichtervorrichtung (14) entstehenden Reaktionsgrößen, insbesondere die auftretenden Reaktionskräfte (A, B) und Momente (Mₓ, M_{y}, M_{T}) ermittelt werden.

5. Vorrichtung nach Anspruch 4,
**dadurch gekennzeichnet,** daß
die Strömungsgleichrichtervorrichtung (14) im wesentlichen senkrecht zur Achse (22) der Gleichrichtervorrichtung (14) angeordnete Ausnehmungen (28) aufweist, deren gedachte Verlängerung durch die Achse der Gleichrichtervorrichtung (14) verläuft.

6. Vorrichtung nach Anspruch 5,
**dadurch gekennzeichnet,** daß
die Ausnehmungen durch ein Kanalsystem gebildet werden.

7. Vorrichtung nach Anspruch 5,
**dadurch gekennzeichnet,** daß
die Ausnehmungen durch ein Lamellensystem gebildet werden.

8. Vorrichtung nach Anspruch 4,
**dadurch gekennzeichnet,** daß
die Strömungsgleichrichtervorrichtung als im wesentlichen trichterförmiges Bauteil (14) ausgebildet ist.

9. Vorrichtung nach Anspruch 4,
**dadurch gekennzeichnet,** daß
die Gleichrichtervorrichtung in ihrer Umfangsrichtung eine geringe Steifigkeit aufweist.

10. Vorrichtung nach Anspruch 9,
**dadurch gekennzeichnet,** daß
die Strömungsgleichrichtervorrichtung (14) in einzelne Bauabschnitte (14.1) unterteilt ist und die Meßeinrichtung (32) zumindest die beim Strömvorgang entstehenden Auflagerkräfte (A, B) der Bauabschnitte (14.1) getrennt ermittelt.

11. Vorrichtung nach einem oder mehreren der Ansprüche 4 bis 10,
**gekennzeichnet durch**
eine Dämpfungsvorrichtung.

## Claims

1. Method for measuring the vorticity components of flows, particularly in cylinders/combustion spaces of internal combustion engines, the flows being induced by inlet members and there being a flow straightener which has an axis, characterized by the following method steps:
- redirection of the flows by means of the flow straightener in such a way that, after passing through the flow straightener, they do not have any momentum in the direction of the axis of the flow straightener and have no angular momentum about the axis of the flow straightener and
- measurement of the reaction quantities, especially the reaction forces (A, B) and moments (Mₓ, M_{y}, M_{T}) occurring, which arise during the flow process due to the redirection at the flow straightener.

2. Method according to Claim 1, characterized in that the straightener is designed in such a way as a rotationally symmetrical part that all the emerging part-flows flow in a jet perpendicular to the axis of rotation, the axis of rotation defining the direction T, two axes perpendicular to the latter axis and to one another defining the directions X and Y, and the moments or stresses acting in directions T, X and Y, are measured.

3. Method according to Claim 1, characterized in that the distribution of the flow with axial momentum over a flow cross-section is determined by dividing the straightener into elements whose supporting reactions are measured separately.

4. Apparatus (12) for carrying out the measuring method according to one or more of Claims 1 to 3, with a flow straightener (14) having an axis (26) and with a measuring device (32), characterized in that
- the flow straightener (14) is designed in such a way that, in operation, the flows are redirected in such a way that, after passing through the flow straightener (14), they do not have any momemtum in the direction of the axis (26) of the flow straightener (14) and have no angular momentum about the axis (26) of the flow straightener (14) and
- the measuring device (32) is designed in such a way that the reaction quantities, in particular the reaction forces (A, B) and moments (Mₓ, M_{y}, M_{T}) occuring, which arise during the flow process due to the redirection at the flow straightener (14) are determined.

5. Apparatus according to Claim 4, characterized in that the flow straightener (14) has apertures (28) which are arranged essentially perpendicular to the axis (22) of the straightener (14) and the imaginary extension of which runs through the axis of the straightener (14).

6. Apparatus according to Claim 5, characterized in that the apertures are formed by a system of passages.

7. Apparatus according to Claim 5, characterized in that the apertures are formed by a system of fins.

8. Apparatus according to Claim 4, characterized in that the flow straightener is designed as an essentially funnel-shaped component (14).

9. Apparatus according to Claim 4, characterized in that the straightener has a low stiffness in its circumferential direction.

10. Apparatus according to Claim 9, characterized in that the flow straightener (14) is divided into individual constructional sections (14.1) and the measuring device (32) separately determines at least those supporting forces (A, B) of the constructional sections (14.1) which arise during the flow process.

11. Apparatus according to one or more of Claims 4 to 10, characterized by a damping device.

## Revendications

1. Procédé pour la mesure des composantes tourbillonnaires d'écoulements, notamment dans des cylindres/chambres de combustion de moteurs à combustion interne, les écoulements étant induits par des organes d'admission et un dispositif redresseur d'écoulement présentant un axe étant présent, **caractérisé** par les étapes suivantes :
- déviation des écoulements, au moyen du dispositif redresseur d'écoulement, de telle sorte qu'après être passés sur le dispositif redresseur d'écoulement, ils ne possèdent pas d'impulsion dans la direction de l'axe du dispositif redresseur d'écoulement et pas d'impulsion de rotation autour de l'axe du dispositif redresseur d'écoulement, et
- mesure des grandeurs de réaction produites pendant le processus d'écoulement par la déviation sur le dispositif redresseur d'écoulement, notamment des forces de réaction (A, B) et des moments (Mₓ, M_{y}, M_{T}) qui apparaissent.

2. Procédé selon la revendication 1, **caractérisé** en ce que le dispositif redresseur est réalisé sous la forme d'un élément à symétrie de révolution de telle sorte que tous les écoulements sortants partiels s'étendent sur un faisceau perpendiculaire à l'axe de rotation, l'axe de rotation définissant la direction T, deux axes perpendiculaires entre eux et à l'axe de rotation définissant les directions X et Y, et les moments ou sollicitations agissant dans les directions T, X, Y étant mesurés.

3. Procédé selon la revendication 1, **caractérisé** en ce que la répartition du courant d'impulsion axial sur une section d'écoulement est déterminée en divisant le dispositif redresseur en éléments dont les réactions d'appui sont séparément mesurées.

4. Dispositif pour la mise en oeuvre du procédé de mesure selon une ou plusieurs des revendications 1 à 3, avec un dispositif redresseur d'écoulement (14) présentant un axe (26) et avec un dispositif de mesure (32), **caractérisé** en ce que
- le dispositif redresseur d'écoulement (14) est conçu de telle sorte que les écoulements pendant le fonctionnement sont déviés de telle sorte qu'aprés être passés sur le dispositif redresseur d'écoulement (14), ils ne possèdent pas d'impulsion dans la direction de l'axe (26) du dispositif redresseur d'écoulement (14) et pas d'impulsion de rotation autour de l'axe (26) du dispositif redresseur d'écoulement (14), et
- le dispositif de mesure (32) est conçu de telle sorte qu'on détermine les grandeurs de réaction produites pendant le processus d'écoulement par la déviation sur le dispositif redresseur d'écoulement (14), notamment les forces de réaction (A, B) et les moments (Mₓ, M_{y}, M_{T}) qui apparaissent.

5. Dispositif selon la revendication 4, **caractérisé** en ce que le dispositif redresseur d'écoulement (14) présente des évidements (28) disposés sensiblement perpendiculairement à l'axe (22) du dispositif redresseur d'écoulement (14), évidements dont le prolongement imaginaire passe par l'axe du dispositif redresseur d'écoulement (14).

6. Dispositif selon la revendication 5, **caractérisé** en ce que les évidements sont formés par un système de canaux.

7. Dispositif selon la revendication 5, **caractérisé** en ce que les évidements sont formés par un système de lamelles.

8. Dispositif selon la revendication 4, **caractérisé** en ce que le dispositif redresseur d'écoulement est réalisé sous la forme d'un élément de construction (14) sensiblement en entonnoir.

9. Dispositif selon la revendication 4, **caractérisé** en ce que le dispositif redresseur d'écoulement présente une faible rigidité dans sa direction circonférentielle.

10. Dispositif selon la revendication 9, **caractérisé** en ce que le dispositif redresseur d'écoulement (14) est divisé en segments de construction individuels (14.1), et le dispositif de mesure (32) détermine séparément au moins les forces d'appui (A, B) des segments de construction (14.1) qui apparaissent lors du processus d'écoulement.

11. Dispositif selon une ou plusieurs des revendications 4 à 10, **caractérisé** par un dispositif d'amortissement.
